# FASCICULE DE BREVET EUROPEEN

(11) **EP 4 043 770 B1**
(45) Date de publication et mention de la délivrance du brevet: **20.09.2023**
(21) Numéro de dépôt: 22150788.2
(22) Date de dépôt: 10.01.2022
(51) Int. Cl.: F16L 1/11, G01V 15/00

(54) **SYSTÈME DE DÉTECTION D'UNE CONDUITE ENTERRÉE**
SYSTEM ZUR ERKENNUNG EINER ERDVERLEGTEN LEITUNG
SYSTEM FOR DETECTING A BURIED PIPE

(30) Priorité: 15.02.2021 FR 2101416
(43) Date de publication de la demande: 17.08.2022
(73) Titulaire: CDCI, 70160 Faverney (FR)
(72) Inventeur: Laurent, Pierre-Jean, 70160 FAVERNEY (FR)
(74) Mandataire: Novagraaf Technologies

(56) Documents cités:
- WO-A2-2007/086062
- US-A- 5 151 657
- US-B1- 6 380 743

## Description

### Domaine technique de l'invention

La présente invention concerne les systèmes de détection de réseaux enterrés.

L'invention concerne plus particulièrement un système de détection d'une conduite enterrée au moyen d'un élément souple qui est inséré dans la conduite enterrée.

### Arrière-plan technique

Il est connu d'utiliser un système de jonc détectable semi rigide qui est introduit dans une ouverture de la conduite enterrée puis poussé manuellement à l'intérieur, par exemple par le document US6380743B1.

Cette solution peut parfois être difficile à mettre en oeuvre lorsque la conduite enterrée décrit un circuit compliqué qui empêche de pousser le jonc sur toute la longueur de la conduite enterrée. De plus l'extrémité libre aval du jonc peut facilement être bloquée par des aspérités à l'intérieur de la conduite enterrée.

L'évolution du jonc à l'intérieur de la conduite est limitée par ses frottements contre la conduite. Lorsque l'élasticité du jonc ne permet plus la poussée, la détection est stoppée, ce qui se produit en moyenne à 200m par exemple. Ceci impose d'avoir des regards ou des accès rapprochés pour permettre la détection de conduite sur de longue distance. Parfois des accès doivent être créés mécaniquement pour permettre une détection conforme.

On connait aussi des documents US5151657A et WO2007/086062A2 des systèmes pour la détection de conduites enterrées.

### Résumé de l'invention

Pour résoudre les problèmes techniques mentionnés précédemment, l'invention propose un système de détection selon la revendication 1 prévu pour permettre la détection d'une conduite enterrée, le système comportant :
- un élément souple comportant une extrémité libre aval apte à être insérée dans la conduite enterrée par une ouverture amont, l'extrémité libre amont restant à l'extérieur de la conduite enterrée,
- un appareil de détection prévu pour être positionné au-dessus de la conduite enterrée de manière à détecter la position de la conduite enterrée en détectant la présence d'un tronçon de l'élément souple,
caractérisé en ce que l'élément souple est constitué par un fil électrique alimenté en courant dont l'extrémité libre aval est pourvue d'un élément d'entraînement, l'élément d'entraînement comportant une surface d'entraînement permettant à un fluide d'entraîner l'élément d'entraînement avec l'extrémité libre aval du fil vers l'aval dans la conduite enterrée.

Le système selon l'invention est particulièrement économique et facile à mettre en oeuvre. Il peut utiliser soit l'écoulement naturel du fluide circulant dans la conduite enterrée, soit l'écoulement d'un fluide rapporté dans la conduite, par exemple de l'air au moyen d'un souffleur d'air du type souffleur à feuille.

Le système selon l'invention n'est pas limité en distance. Il permet de grandes longueurs de détection par un seul accès, par exemple sur plus de 1000 m. Il n'est donc pas nécessaire de bénéficier d'accès ou de regards rapprochés.

Selon d'autres caractéristiques avantageuses de l'invention :
- le fil électrique est constitué par un fil torsadé à au moins deux brins ;
- l'élément d'entraînement comporte un corps principal de forme tubulaire ;
- le corps principal forme un flotteur apte à rester à la surface d'un flux de liquide ;
- le système comporte un dévidoir sur laquelle le fil électrique est prévu pour être enroulé avant d'être déroulé ;
- le système comporte un souffleur d'air prévu pour pousser l'élément d'entraînement vers l'aval dans la conduite enterrée, notamment lorsqu'aucun flux n'est présent dans la conduite, par exemple dans une conduite d'eaux usées.

L'invention propose aussi un procédé pour la détection d'une conduite enterrée caractérisé en ce qu'il comporte les étapes suivantes :
a) insérer un élément souple détectable par un appareil de détection dans la conduite enterrée par une ouverture amont, l'élément souple étant constitué par un fil électrique dont une extrémité libre aval est pourvue d'un élément d'entraînement comportant une surface d'entraînement et dont l'extrémité libre amont est prévue pour être alimentée en courant électrique à l'extérieur de la conduite enterrée,
b) entraîner l'élément souple vers l'aval de la conduite au moyen d'un fluide qui coopère avec la surface d'entraînement de l'élément d'entraînement,
c) alimenter le fil électrique en courant,
b) placer l'appareil de détection au-dessus de la conduite enterrée, au-dessus du sol, de manière à détecter la position de la conduite enterrée en détectant la présence du courant passant dans le fil électrique.

Avantageusement, l'étape b) est mise en oeuvre au moyen d'un souffleur d'air.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une en coupe qui représente schématiquement un premier mode de réalisation du système de détection selon l'invention utilisant un flux d'air pulsé pour pousser un élément d'entraînement ;
[Fig.2] - la figure 2 est une vue similaire à celle de la figure 1 qui représente un deuxième mode de réalisation du système de détection selon l'invention dans lequel l'élément d'entraînement a un corps principal en forme de cloche ;
[Fig.3] - la figure 3 est une vue similaire à celle de la figure 1 qui représente un troisième mode de réalisation du système de détection selon l'invention utilisant un liquide pour entraîner l'élément d'entraînement ;

### Description détaillée de l'invention

Dans la description qui va suivre, des éléments identiques, similaires ou analogues seront désignés par les mêmes chiffres de référence.

### Premier mode de réalisation

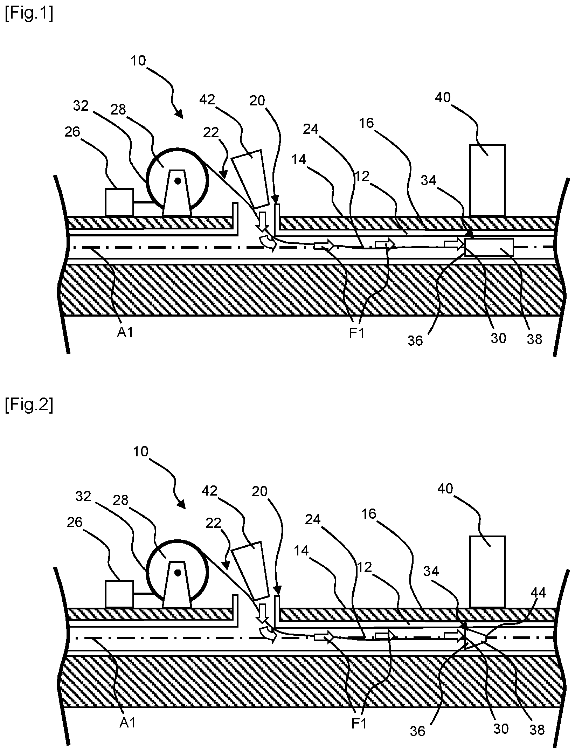

Sur la figure 1 on a représenté un premier mode de réalisation d'un système de détection 10 prévu pour permettre la détection d'une conduite enterrée 12.

Dans l'exemple représenté, la conduite enterrée 12 s'étend ici longitudinalement suivant un axe principal A1 qui s'étend d'amont en aval, ce qui correspond à une orientation de la gauche vers la droite en considérant la figure 1. La conduite enterrée 12 est par exemple constituée par un tuyau cylindrique qui s'étend sous la surface du sol 14, sous une couche superficielle 16 de terre ou d'un autre matériau, par exemple du béton.

La conduite enterrée 12 comporte ici un regard 18 qui forme une ouverture amont 20 permettant l'insertion d'un élément souple 22 appartenant au système de détection 10.

Conformément aux enseignements de l'invention, l'élément souple 22 est constitué par un fil électrique 24 alimenté en courant électrique par une source d'alimentation 26. Le fil électrique 24 est de préférence du type fil torsadé, par exemple constitué ici de deux brins torsadés.

Le système de détection 10 comporte un dévidoir 28 sur lequel est enroulé le fil électrique 24 formant ainsi une bobine. Le fil électrique 24 comporte une extrémité libre aval 30, qui est prévue pour être insérée dans la conduite enterrée 12 par l'ouverture amont 20, et une extrémité libre amont 32 qui est raccordée électriquement à la source d'alimentation 26.

Conformément aux enseignements de l'invention, l'extrémité libre aval 30 du fil électrique 24 est pourvue d'un élément d'entraînement 34. L'élément d'entraînement 34 comporte une surface d'entraînement 36 permettant à un fluide d'entraîner l'élément d'entraînement 34, avec l'extrémité libre aval 30 du fil électrique 24, vers l'aval dans la conduite enterrée 12.

Selon le premier mode de réalisation représenté ici, l'élément d'entraînement 34 comporte un corps principal 38 tubulaire cylindrique sur lequel l'extrémité libre aval 30 du fil électrique 24 est fixée par des moyens appropriés. Le corps principal 38 a un diamètre extérieur et une épaisseur radiale suffisante pour boucher une grande partie de la conduite enterrée 12 et ainsi être poussé plus facilement par un fluide injecté dans la conduite enterrée, notamment par un flux d'air pulsé F1. L'épaisseur radiale du corps principal 38 est par exemple comprise entre un tiers et la moitié du rayon du corps principal 38 ou du rayon de la conduite enterrée 12.

L'élément d'entraînement 34 est réalisé de préférence dans un matériau suffisamment léger pour être entraîné facilement, avec le fil électrique 24, par le flux d'air pulsé F1. Le corps principal 38 est par exemple réalisé en mousse expansée.

Le système de détection 10 comporte également un appareil de détection 40 prévu pour être positionné au-dessus de la conduite enterrée 12, au-dessus de la surface du sol 14, de manière à détecter la position de la conduite enterrée 12 en détectant la présence d'un tronçon du fil électrique 24. Plus particulièrement, l'appareil de détection 40 est prévu pour détecter par tout moyen approprié le courant électrique qui passe dans le tronçon de fil électrique 24 agencé en vis-à-vis.

Selon le premier mode de réalisation, le système de détection 10 comporte un souffleur d'air 42 tel qu'un souffleur à feuilles qui permet d'injecter de l'air pulsé par l'ouverture amont 20 afin de pousser l'élément d'entraînement 34 vers l'aval. Le flux d'air pulsé F1 produit par le souffleur d'air 42 pousse sur la surface d'entraînement 36 ce qui provoque le déplacement de l'élément d'entraînement 34 vers l'aval dans la conduite enterrée 12.

On décrit maintenant un procédé pour la détection de la conduite enterrée 12 mis en oeuvre au moyen du système de détection 10 selon le premier mode de réalisation de l'invention.

Un opérateur positionne le dévidoir 28 à proximité de l'ouverture amont 20 et insère l'élément d'entraînement 34, qui est attaché à l'extrémité libre aval du fil électrique 24, dans la conduite enterrée 12 par l'ouverture amont 20. L'opérateur produit ensuite un flux d'air pulsé F1 au moyen du souffleur d'air 42 dans la conduite enterrée 12, par l'ouverture amont 20, en direction de l'élément d'entraînement 34, de manière à pousser l'élément d'entraînement 34 vers l'aval en entraînant le fil électrique 24 qui se déroule à partir du dévidoir 28.

Lorsque le fil électrique 24 est suffisamment déployé et que l'élément d'entraînement 34 est suffisamment loin dans la conduite enterrée 12, l'opérateur alimente le fil électrique 24 en courant au moyen de la source d'alimentation 26 puis il positionne l'appareil de détection 40 au-dessus de la conduite enterrée 12, d'abord à proximité de l'ouverture amont 20 puis en suivant le chemin de la conduite enterrée 12, grâce à la détection du courant électrique qui passe dans le fil électrique 24.

### Deuxième mode de réalisation

Sur la figure 2 on a représenté un deuxième mode de réalisation de l'invention. On décrit maintenant uniquement ce qui différencie le deuxième mode de réalisation du premier mode de réalisation.

Le deuxième mode de réalisation se distingue du premier mode de réalisation par la forme de l'élément d'entraînement 34. En effet, l'élément d'entraînement 34 comporte ici un corps principal 38 en forme de cloche, ou de chapeau, dont le sommet 44 est orienté vers l'aval. Ceci permet au flux d'air pulsé F1 d'exercé un appui puissant sur l'élément d'entraînement 34 en s'appuyant sur toute la surface d'entraînement 36 formée ici par la paroi interne du corps principal 38 en forme de cloche.

Le procédé de détection selon l'invention s'applique de la même manière que pour le premier mode de réalisation.

### Troisième mode de réalisation

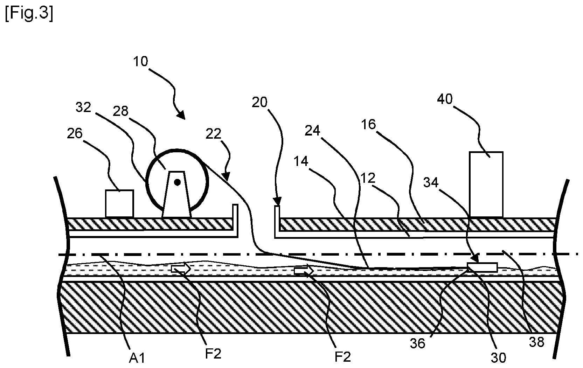

Sur la figure 3 on a représenté un troisième mode de réalisation de l'invention. On décrit maintenant uniquement ce qui différencie le troisième mode de réalisation du premier mode de réalisation.

Le troisième mode de réalisation se distingue du premier mode de réalisation par l'utilisation d'un autre fluide que l'air pour pousser l'élément d'entraînement 34. C'est un flux de liquide F2 qui circule dans la conduite enterrée 12 vers l'aval et qui pousse l'élément d'entraînement 34.

Le flux de liquide F2 peut être celui d'un effluent qui circule habituellement dans la conduite enterrée 12. Alternativement ou en plus, l'opérateur peut injecter un flux de liquide F2, par exemple de l'eau, par l'ouverture amont 20, pour renforcer la force de poussée sur l'élément d'entraînement 34.

Le corps principal 38 de l'élément d'entraînement 34 forme ici un flotteur apte à rester à la surface du flux de liquide F2. L'élément d'entraînement 34 décrit avec le premier mode de réalisation peut être employé aussi dans le troisième mode de réalisation.

On note que la conduite enterrée 12 peut ici avoir un diamètre interne bien supérieur au diamètre extérieur de l'élément d'entraînement 34, puisque l'entraînement se fait par flottaison.

### LEGENDE

10 : système de détection
12 : conduite enterrée
14 : surface du sol
16 : couche superficielle
18 : regard
20 : ouverture amont
22 : élément souple
24 : fil électrique
26 : source d'alimentation
28 : dévidoir
30 : extrémité libre aval
32 : extrémité libre amont
34 : élément d'entraînement
36 : surface d'entraînement
38 : corps principal
40 : appareil de détection
42 : souffleur d'air
44 : sommet
A1 : axe principal
F1 : flux d'air pulsé
F2 : flux de liquide

## Revendications

1. Système de détection (10) prévu pour permettre la détection d'une conduite enterrée (12), le système (10) comportant :
- un élément souple (22) comportant une extrémité libre aval (30) apte à être insérée dans la conduite enterrée (12) par une ouverture amont (20), l'extrémité libre amont (32) restant à l'extérieur de la conduite enterrée (12),
- un appareil de détection (40) prévu pour être positionné au-dessus de la conduite enterrée (12) de manière à détecter la position de la conduite enterrée (12) en détectant la présence d'un tronçon de l'élément souple (22), l'élément souple (22) étant constitué par un fil électrique (24) alimenté en courant dont l'extrémité libre aval (30) est pourvue d'un élément d'entraînement (34), l'élément d'entraînement (34) comportant une surface d'entraînement (36) permettant à un fluide d'entraîner l'élément d'entraînement (34) avec l'extrémité libre aval (30) du fil vers l'aval dans la conduite enterrée (12) **caractérisé en ce que** l'élément d'entraînement (34) comporte une paroi en forme de cloche dont le sommet (44) est orienté vers l'aval.

2. Système de détection (10) selon la revendication précédente, **caractérisé en ce que** le fil électrique (24) est constitué par un fil torsadé à au moins deux brins.

3. Système de détection (10) selon la revendication précédente, **caractérisé en ce que** l'élément d'entraînement (34) comporte un corps principal (38) tubulaire.

4. Système de détection (10) selon la revendication précédente, **caractérisé en ce que** le corps principal (38) forme un flotteur apte à rester à la surface d'un flux de liquide (F2).

5. Système de détection (10) selon l'une quelconque des revendications précédentes, **caractérisé en ce qu'**il comporte un dévidoir (28) sur laquelle le fil électrique (24) est prévu pour être enroulé avant d'être déroulé.

6. Système de détection (10) selon l'une quelconque des revendications précédentes, **caractérisé en ce qu'**il comporte un souffleur d'air (42) prévu pour pousser l'élément d'entraînement (34) vers l'aval dans la conduite enterrée (12).

7. Procédé pour la détection d'une conduite enterrée (12) avec un système selon la revendication 1 **caractérisé en ce qu'**il comporte les étapes suivantes :
a) insérer un élément souple (22) détectable par un appareil de détection (40) dans la conduite enterrée (12) par une ouverture amont (20), l'élément souple (22) étant constitué par un fil électrique (24) dont une extrémité libre aval (30) est pourvue d'un élément d'entraînement (34) comportant une surface d'entraînement (36) et dont l'extrémité libre amont (32) est prévue pour être alimentée en courant électrique à l'extérieur de la conduite enterrée (12),
b) entraîner l'élément souple (22) vers l'aval de la conduite au moyen d'un fluide qui coopère avec la surface d'entraînement (36) de l'élément d'entraînement (34),
c) alimenter le fil électrique (24) en courant,
b) placer l'appareil de détection (40) au-dessus de la conduite enterrée (12), au-dessus du sol, de manière à détecter la position de la conduite enterrée (12) en détectant la présence du courant passant dans le fil électrique (24).

8. Procédé selon la revendication précédente, **caractérisé en ce que** l'étape b) est mise en oeuvre au moyen d'un souffleur d'air (42).

## Patentansprüche

1. Erkennungssystem (10), das zum Ermöglichen der Erkennung einer erdverlegten Leitung (12) vorgesehen ist, wobei das System (10) aufweist:
- ein flexibles Element (22), das ein stromabwärtiges freies Ende (30) aufweist, das geeignet ist, um in die erdverlegte Leitung (12) durch eine stromaufwärtige Öffnung (20) eingeführt zu werden, wobei das stromaufwärtige freie Ende (32) außerhalb der erdverlegten Leitung (12) bleibt,
- eine Erkennungsvorrichtung (40), die zum Positioniertwerden über der erdverlegten Leitung (12) vorgesehen ist, um die Position der erdverlegten Leitung (12) durch Erkennen des Vorhandenseins eines Abschnitts des flexiblen Elements (22) zu erkennen, wobei das flexible Element (22) aus einem elektrischen Draht (24) besteht, der mit Strom versorgt wird, dessen stromabwärtiges freies Ende (30) mit einem Antriebselement (34) ausgestattet ist, wobei das Antriebselement (34) eine Antriebsoberfläche (36) aufweist, die ermöglicht, dass Fluid das Antriebselement (34) mit dem stromabwärtigen freien Ende (30) des Drahts in die stromabwärtige Richtung in der erdverlegten Leitung (12) antreibt, **dadurch gekennzeichnet, dass** das Antriebselement (34) eine glockenförmige Wand aufweist, deren Oberteil (44) in die stromabwärtige Richtung gerichtet ist.

2. Erkennungssystem (10) nach dem vorstehenden Anspruch,
**dadurch gekennzeichnet, dass** der elektrische Draht (24) aus einem verdrillten Draht mit mindestens zwei Einzeldrähten besteht.

3. Erkennungssystem (10) nach dem vorstehenden Anspruch,
**dadurch gekennzeichnet, dass** das Antriebselement (34) einen röhrenförmigen Hauptkörper (38) aufweist.

4. Erkennungssystem (10) nach dem vorstehenden Anspruch,
**dadurch gekennzeichnet, dass** der Hauptkörper (38) einen Schwimmer ausbildet, der geeignet ist, um auf der Oberfläche eines Flüssigkeitsstroms (F2) zu bleiben.

5. Erkennungssystem (10) nach einem der vorstehenden Ansprüche, **dadurch gekennzeichnet, dass** es eine Drahthaspel (28) aufweist, auf der der elektrische Draht (24) zum Aufgewickeltwerden vor dem Abgewickeltwerden vorgesehen ist.

6. Erkennungssystem (10) nach einem der vorstehenden Ansprüche, **dadurch gekennzeichnet, dass** es ein Luftgebläse (42) aufweist, das zum Schieben des Antriebselements (34) in die stromabwärtige Richtung in der erdverlegten Leitung (12) vorgesehen ist.

7. Verfahren für die Erkennung einer erdverlegten Leitung (12) mit einem System nach Anspruch 1, **dadurch gekennzeichnet, dass** es die folgenden Schritte aufweist:
a) Einführen eines flexiblen Elements (22), das durch eine Erkennungsvorrichtung (40) erkennbar ist, in die erdverlegte Leitung (12) durch eine stromaufwärtige Öffnung (20), wobei das flexible Element (22) aus einem elektrischen Draht (24) besteht, von dem ein stromabwärtiges Ende (30) mit einem Antriebselement (34) ausgestattet ist, das eine Antriebsoberfläche (36) aufweist und dessen stromaufwärtiges Ende (32) zum Versorgtwerden mit elektrischem Strom außerhalb der erdverlegten Leitung (12) vorgesehen ist,
b) Antreiben des flexiblen Elements (22) in die stromabwärtige Richtung der Leitung mittels eines Fluids, das mit der Antriebsoberfläche (36) des Antriebselements (34) zusammenwirkt,
c) Versorgen des elektrischen Drahts (24) mit Strom,
b) Platzieren der Erkennungsvorrichtung (40) über der erdverlegten Leitung (12) über dem Boden, um die Position der erdverlegten Leitung (12) durch Erkennen des Vorhandenseins des Strom, der in dem elektrischen Draht (24) verläuft, zu erkennen.

8. Verfahren nach dem vorstehenden Anspruch,
**dadurch gekennzeichnet, dass** der Schritt b) mittels eines Luftgebläses (42) implementiert wird.

## Claims

1. A detection system (10) designed to allow the detection of an underground pipe (12), the system (10) comprising:
- a flexible element (22) comprising a downstream free end (30) capable of being inserted into the underground pipe (12) through an upstream opening (20), the upstream free end (32) remaining outside the underground pipe (12),
- a detection device (40) designed to be positioned above the underground pipe (12) in such a way as to detect the position of the underground pipe (12) by detecting the presence of a section of the flexible element (22), the flexible element (22) being constituted by a current-supplied electrical wire (24) whose downstream free end (30) is provided with a drive element (34), the drive element (34) having a drive surface (36) allowing a fluid to drive the drive element (34) with the downstream free end (30) of the wire downstream into the underground pipe (12) **characterized in that** the drive element (34) has a bell-shaped wall with the apex (44) facing downstream.

2. A detection system (10) according to claim 1, **characterized in that** the electrical wire (24) is constituted by a twisted wire with at least two strands.

3. A detection system (10) according to claim 2, **characterized in that** the drive element (34) comprises a tubular main body (38).

4. A detection system (10) according to claim 3, **characterized in that** the main body (38) forms a float able to remain on the surface of a liquid flow (F2).

5. A detection system (10) according to any one of the preceding claims, **characterized in that** it comprises a reel (28) on which the electric wire (24) is provided to be wound before being unwound.

6. A detection system (10) according to any one of the preceding claims, **characterized in that** it comprises an air blower (42) provided to push the drive element (34) downstream into the underground pipe (12).

7. A method for detecting an underground pipe (12) with a system according to the claim 1 **characterized in that** it comprises the following steps:
a) inserting a flexible element (22) detectable by a detection device (40) into the underground pipe (12) through an upstream opening (20), the flexible element (22) being constituted by an electric wire (24), a downstream free end (30) of which is provided with a drive element (34) comprising a drive surface (36) and the upstream free end (32) of which is designed to be supplied with electric current outside the underground pipe (12),
b) driving the flexible element (22) downstream of the pipe by means of a fluid which cooperates with the drive surface (36) of the drive element (34),
c) supplying current to the electrical wire (24),
d) placing the detection device (40) above the underground pipe (12), above the ground, so as to detect the position of the underground pipe (12) by detecting the presence of the current flowing in the electrical wire (24).

8. A method according to the preceding claim, **characterized in that** step b) is carried out by means of an air blower (42).
